# EUROPÄISCHE PATENTANMELDUNG

(11) **EP 2 865 902 A1**
(43) Veröffentlichungstag der Anmeldung: **29.04.2015**
(21) Anmeldenummer: 13190410.4
(22) Anmeldetag: 28.10.2013
(51) Int. Cl.: F16B 12/20, F16B 12/32, F16B 12/18

(54) **Verbindungsvorrichtung für ein Bausystem und Bausystem**

(71) Anmelder: Wey, Peter, 6340 Baar (CH)
(72) Erfinder: Wey, Peter, 6340 Baar (CH)
(74) Vertreter: Rutz & Partner

(57) **Zusammenfassung**

Die Verbindungsvorrichtung (1) umfasst eine Spannvorrichtung (11), die der lösbaren Verbindung von zwei ersten Systemteilen (5A, 5B) eines Bausystems (10) dient, wie eines Möbelstücks, eines Gestells, eines Regals, eines Schranks oder einer Raumabgrenzung. Erfindungsgemäss umfasst die Spannvorrichtung (11) eine einteilige oder mehrteilige Zugstange (1112; 113; 1122), die einen Haltekopf (1111) und einen Spannkopf (1121) miteinander verbindet, der wenigstens eine zur Längsachse der Zugstange (1112; 113; 1122) geneigte Spannfläche (11211) aufweist. Ferner ist ein mit dem einen ersten Systemteil (5A) koppelbares erstes Lagerteil (14) vorgesehen, welches eine der Aufnahme der Zugstange (1112; 113; 1122) dienende Lageröffnung (140) aufweist. Weiter ist ein mit dem anderen ersten Systemteil (5B) koppelbares zweites Lagerteil (15) vorgesehen, welches eine der Aufnahme der Zugstange (1112; 113; 1122) dienende Lageröffnung (150) und einen der Aufnahme des Spannkopfs (1121) dienenden Lagersitz (151) aufweist, aus dem der Spannkopf (1121) mit einer Drehung herausdrehbar ist, um die Zugstange (1112; 113; 1122) zu spannen.

## Beschreibung

Die Erfindung betrifft eine Vorrichtung zur lösbaren Verbindung von Elementen eines Bausystems, insbesondere eines Möbelstücks, eines Gestells, eines Regals, eines Schrankes oder einer Raumabgrenzung, sowie ein solches Bausystem.

Möbelstücke, wie Gestelle, Regale und Schränke, bestehen üblicherweise aus Elementen, die bei der Herstellung durch Schrauben, Nägel, Klebstoff oder mechanische Verbindungsvorrichtungen unlösbar miteinander verbunden werden. Durch den Endabnehmer können diese Gegenstände daher normalerweise nicht selbst zusammengefügt werden, weshalb Bausysteme mit Systemteilen geschaffen wurden, welche vom Endabnehmer anhand von Verbindungsvorrichtungen miteinander verbunden und wieder voneinander gelöst werden können.

Aus [1], EP0400345A1, ist eine für ein Rohrsystem vorgesehene Verbindungsvorrichtung bekannt, die ein Verbindungselement aufweist, das innerhalb eines Rohres festklemmbar und mit einem angrenzenden Bauteil bzw. einem Kopplungselement verbindbar ist, das seinerseits mittels weiteren Verbindungselementen mit weiteren Rohren verbindbar ist.

Aus [2], DE4316808A1, ist eine Verbindungsvorrichtung bekannt, die eine Spannschraube aufweist, mittels der ineinander greifende Keilstücke innerhalb eines Rohrelementes radial aufspreizt werden können, um das Rohrelement mit einem weiteren Montagekörper zu verbinden.

Aus [3], WO02/099292A1, ist eine Verbindungsvorrichtung bekannt, die ein in ein Rohr einsetzbares Einsatzelement aufweist, in das eines von mehreren Dornelementen eines Knotenkörpers einsetzbar ist, der an das Rohr anschliesst und anhand eines Zugmittels mit dem Einsatzelement verbindbar ist. Mittels des Zugmittels wird das Einsatzelement gegen das Dornelement gezogen, aufgespreizt und mit dem Rohr verspannt.

Aus [4], EP2034194B1, ist eine Verbindungsvorrichtung mit einer Spannschraube bekannt, die zur Einwirkung auf zueinander komplementäre Verbindungselemente vorgesehen ist und mittels der die Verbindungsvorrichtung innerhalb des Rohrelements verspannt werden kann.

Nachteilig bei diesen Verbindungsvorrichtungen ist, dass diese nur in Verbindung mit Rohrelementen einsetzbar sind und deren Verwendung daher limitiert ist. Zur Fixierung der Montageelemente muss zudem auf zwei Seiten eines Rohres in das Rohrsystem eingegriffen werden, wozu Öffnungen oder spezielle Werkzeuge erforderlich sind. Dabei ist sicherzustellen, dass eine stabile kraftschlüssige Verbindung bzw. eine Spannverbindung resultiert und sich diese Verbindung nicht selbsttätig lösen kann. Bei grösserer Krafteinwirkung besteht daher die Gefahr, dass sich eine kraftschlüssige Verbindung lösen kann.

Der vorliegenden Erfindung liegt die Aufgabe zugrunde, eine verbesserte Verbindungsvorrichtung zu schaffen, mittels der beliebige Elemente eines Bausystems, einschliesslich Rohre, miteinander verbindbar sind.

Insbesondere ist eine Verbindungsvorrichtung zu schaffen, die kostengünstig herstellbar sowie einfach montierbar und wieder demontierbar ist.

Mittels der Verbindungsvorrichtung sollen Systemteile, beispielsweise Teile eines Möbelstücks, eines Gestells, eines Regals, eines Schrankes oder einer Raumabgrenzung, stabil miteinander verbindbar sein, so dass sie sich auch bei grösseren Krafteinwirkungen nicht voneinander lösen.

Die erfindungsgemässe Verbindungsvorrichtung soll universell einsetzbar sein und den einfachen Aufbau beliebiger Bausysteme ermöglichen.

Ferner sollen auch unterschiedliche Systemteile, wie Rohre oder Wände, miteinander kombinierbar sein, um ein Bausystem zu schaffen.

Diese Aufgabe wird mit einer Verbindungsvorrichtung gelöst, welche die in Anspruch 1 angegebenen Merkmale aufweist. Vorteilhafte Ausgestaltungen der Erfindung sind in weiteren Ansprüchen angegeben.

Die Verbindungsvorrichtung umfasst eine Spannvorrichtung, die der lösbaren Verbindung von zwei ersten Systemteilen eines Bausystems dient, wie eines Möbelstücks, eines Gestells, eines Regals, eines Schranks oder einer Raumabgrenzung.

Erfindungsgemäss umfasst die Spannvorrichtung eine einteilige oder mehrteilige Zugstange, die einen Haltekopf und einen Spannkopf miteinander verbindet, der wenigstens eine zur Längsachse der Zugstange geneigte Spannfläche aufweist. Ferner ist ein mit dem einen ersten Systemteil koppelbares erstes Lagerteil vorgesehen, welches eine der Aufnahme der Zugstange dienende Lageröffnung aufweist. Weiter ist ein mit dem anderen ersten Systemteil koppelbares zweites Lagerteil vorgesehen, welches eine der Aufnahme der Zugstange dienende Lageröffnung und einen der Aufnahme des Spannkopfs dienenden Lagersitz aufweist, aus dem der Spannkopf mit einer Drehung herausdrehbar ist, um die Zugstange zu spannen.

Der Erfindung liegt der Gedanke zu Grunde, dass eine metallene Zugstange federelastisch dehnbar ist und dass zwei erste Systemteile durch eine gespannte Zugstange formschlüssig stabil miteinander verbindbar und gegen ein dazwischen liegendes Distanzelement, bzw. ein nachstehend beschriebenes zweites Systemteil, anziehbar sind. Dazu werden der Haltekopf und der Spannkopf je durch eine Montageöffnung im zugehörigen ersten Systemteil hindurchgeführt und auf der anderen Seite anhand eines zugehörigen Lagerteils fixiert. Die beiden Systemteile sind nun formschlüssig miteinander verbunden. Der keilförmig ausgestaltete Spannkopf ist in den Lagersitz des zweiten Lagerteils eingesenkt und kann nun typischerweise durch eine Vierteldrehung aus dem Lagersitz heraus gedreht werden, so dass er oberhalb des Lagersitzes auf dem zweiten Lagerteil ruht. Die Zugstange wurde nun um die Distanz gedehnt, um die der Spannkopf aus dem Lagersitz heraus geführt und angehoben wurde.

Die Montage erfolgt mit wenigen Handgriffen, mit denen die Verbindungsvorrichtung in die beiden ersten Systemteile eingesetzt und durch eine Vierteldrehung des Spannkopfs gespannt wird. Die Vierteldrehung kann schnell und bequem vollzogen werden, so dass das Spannen nur wenige Sekunden in Anspruch nimmt. Die dadurch in der Zugstange resultierende Zugkraft bewirkt, dass die Verbindungsvorrichtung die beiden ersten Systemteile gegeneinander bzw. gegen ein Distanzelement zieht und spielfrei hält.

Damit die Drehung des Spannkopfs innerhalb des Lagersitzes leicht vollzogen werden kann, weist dieser vorzugsweise wenigstens eine zur Längsachse der Zugstange geneigte Sitzfläche auf, die vorzugsweise parallel zur Spannfläche des Spannkopfs verläuft, wenn dieser im Lagersitz eingesenkt ist. Die Spannfläche und die Sitzfläche sind vorzugsweise derart ausgestaltet, dass der Kontakt zwischen der Spannfläche und der Sitzfläche stets flächig und ohne Einwirkung einer Kante ist. Die am Spannkopf vorgesehene Spannfläche kann entlang einer Bahn verlaufen, die stets parallel an der Sitzfläche anliegt. Beispielsweise verläuft die Bahn entsprechend einer Gewindeflanke mit entsprechender Gewindehöhe, die zumindest annähernd der Höhe des Spannkopfs oder einem Teil davon entspricht. Durch die gegenseitige flächige Kontaktierung der Spannfläche und der Sitzfläche wird gewährleistet, dass die Drehung mit minimalem Kraftaufwand vollzogen werden kann und ein Verschleiss der kontaktierenden Elemente vermieden wird. Der Drehbereich des Spannkopfs liegt innerhalb des Bereichs einer Umdrehung, wobei die minimale Drehung und die maximale Steigung von den gewünschten Zugkräften und den verwendeten Materialien abhängig sind. Idealerweise wird für das Spannen der Spannvorrichtung eine Drehung von 75° bis 90°, idealerweise 85° vorgesehen.

Der Spannkopf und der Lagersitz können auf einer Seite oder auf beiden Seiten mit geneigten Flächen versehen sein. Der Spannkopf weist beispielsweise die Form eines Keils auf, dessen Keilflächen die Spannflächen bilden. Eine sehr gute Kontaktierung wird erzielt, wenn die Keilflächen bzw. die Spannflächen peripher nicht zu einer Kante, sondern zu einer Abrundung verlaufen. Bei dieser Ausgestaltung der Sitzflächen und der Spannflächen muss bei der Drehung des Spannkopfs somit nebst geringen Reibungskräften im Wesentlichen nur die Zugkraft der Zugstange überwunden werden, um den Spannkopf auf die Oberseite des Lagerteils zu fahren.

Damit der Spannkopf auf der Oberseite des Lagerteils sicher gehalten wird, ist dort vorzugsweise eine Arretiernut vorgesehen, in die der vorzugsweise keilförmige Spannkopf einrasten kann. Die Tiefe der Arretiernut kann dabei sehr gering, beispielsweise weniger als 1/10 mm sein, wird vorzugsweise jedoch in einem Bereich von etwa 3/10mm gewählt. Aufgrund der Zugkraft der Zugstange wird der Spannkopf stabil in der Arretiernut gehalten. Sofern die Arretiernut keilförmig ausgebildet ist, kann der Spannkopf auch leicht wieder aus der Arretiernut heraus gedreht werden.

Die Drehung des Spannkopfs aus dem Lagersitz entspricht vorzugsweise einer Drehung von 85°-90°, so dass die vorzugsweise keilförmige Öffnung des Lagersitzes und die Arretiernut vorzugsweise senkrecht zueinander ausgerichtet sind.

Die beiden Lagerteile, mittels denen der Haltekopf und der Spannkopf innerhalb der zugehörigen Systemteile gehalten werden, sind vorzugsweise U-förmig ausgestaltet, so dass sie von der Seite her unter den Haltekopf oder den Spannkopf geschoben werden können, der sich danach nicht wieder vom zugehörigen ersten Systemteil lösen kann. Vorzugsweise weist jedes Systemteil eine Montageöffnung auf, durch die der Haltekopf oder der Spannkopf hineingeschoben werden kann. Durch das entsprechende erste oder zweite Lagerteil, welches grösser ist als die Montageöffnung, wird der Haltekopf oder der Spannkopf in der Art einer Unterlagscheibe gehalten.

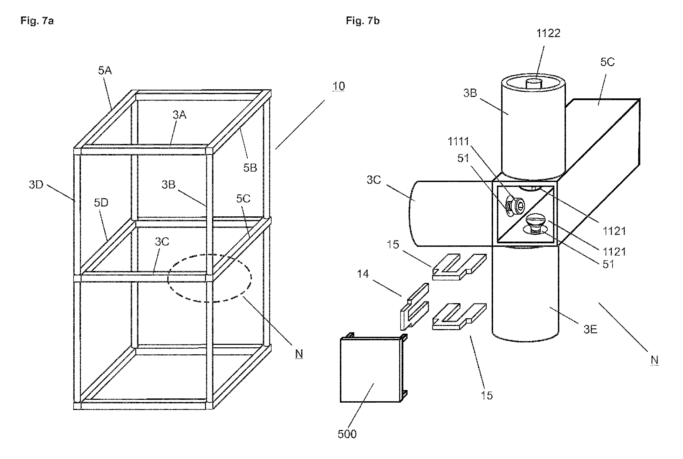

Die ersten Systemteile weisen z.B. ein Rechteckprofil auf, welches in einem Knotenpunkt vorzugsweise mehrere Montageöffnungen aufweist. In einem Knotenpunkt des im Aufbau begriffenen Bausystems können daher die Halteköpfe oder die Spannköpfe von mehreren Verbindungsvorrichtungen aus mehreren Richtungen in ein erstes Systemteil eingeführt werden. Zugriff erhält der Anwender beispielsweise von der Stirnseite des ersten Systemteils, an der eine Öffnung vorgesehen ist, durch die hindurch die Lagerteil eingesetzt werden (siehe z.B. Figur 7b).

Die Zugstange kann verschiedenartig ausgestaltet sein und ist vorzugsweise verlängerbar, so dass die Verbindungsvorrichtung leicht an die Dimensionen des Bausystems und der Systemteile angepasst werden kann.

Vorzugsweise umfasst die Zugstange ein mit dem Haltekopf versehenes Halteteil, vorzugsweise eine Halteschraube, und ein mit dem Spannkopf versehenes Spannteil, vorzugsweise eine Spannschraube, die direkt oder durch ein Verbindungsteil, vorzugsweise eine Gewindehülse, miteinander verbunden sind. Die Gewindehülse erlaubt es, das Halteteil und das Spannteil gegeneinander oder auseinander zu drehen, um den Abstand zwischen dem Haltekopf und dem Spannkopf einzustellen.

Es ist auch möglich, das Halteteil und das Spannteil derart auszubilden, dass diese gegeneinander verschiebbar und direkt miteinander verbindbar sind. Beispielsweise sind das Halteteil und das Spannteil durch Gewindeelemente miteinander verbunden und gegeneinander drehbar. Beispielsweise ist eines der beiden Teile als Gewindehülse und das andere Teil als Gewindestange ausgebildet. Alternativ können das Halteteil und das Spannteil mit Kopplungselementen, wie Haken und Öffnungen, versehen sein, die es erlauben, das Halteteil und das Spannteil mit gewähltem Abstand zwischen Haltekopf und Spannkopf miteinander zu verbinden.

Der Abstand zwischen dem Haltekopf und dem Spannkopf wird vorzugsweise unter Berücksichtigung der Länge der Zugstange gewählt.

Der Abstand zwischen Haltekopf und Spannkopf bei entspannter Zugstange und die resultierende Längendehnung nach dem Drehen des Spannkopfs entsprechen zusammen der Gesamtlänge der gespannten Zugstange. Die Längendehnung, die erforderlich ist, um eine gewünschte Zugkraft in der Zugstange zu erreichen, ist proportional zur Länge der Zugstange selbst. Bei längeren Zugstangen ist daher eine entsprechend grössere Längendehnung erforderlich. Entsprechend ist auch die Höhe des Spannkopfs bzw. die Länge der Spannfläche zu wählen.

Vorzugsweise wird die Zugstange mit wenigstens einer Markierung versehen, die dem Anwender die erforderliche Einstellung der Länge der Zugstange anzeigt. Beispielsweise wird das Spannteil in die Verbindungshülse eingeschraubt, bis die Markierung erreicht ist.

Vorzugsweise wird das Halteteil oder das Spannteil beispielsweise drehfest mit der Verbindungshülse verbunden, während das Spannteil oder das Halteteil mit einem Gewindeschaft innerhalb der Verbindungshülse drehbar ist. Damit sich die gewählte Einstellung nicht selbsttätig verändert, wird innerhalb der Gewindehülse vorzugsweise eine zähflüssige Gewindebeschichtung vorgesehen, welche die gegeneinander drehbaren Gewindeteile kraftschlüssig miteinander verbindet und eine gegenseitige Drehung der beiden Gewindeteile nur unter Einwirkung eines entsprechend hohen Drehmoments erlaubt.

In bevorzugten Ausgestaltungen ist die Verbindungsvorrichtung in ein zweites Systemteil, vorzugsweise ein Rohrelement oder ein Wandelement, eingebettet, welches ein Distanzelement bildet, gegen das die beiden ersten Systemteile anziehbar sind. Möglich ist jedoch auch die Verwendung eines separaten Distanzelements.

Sofern das zweite Systemteil als Wandelement ausgebildet ist, so sind zwei Verbindungsvorrichtungen parallel zueinander ausgerichtet an den Seiten des Wandelements vorgesehen. Die beiden ersten Systemteile, beispielsweise ebenfalls Wandelemente werden daher durch ein weiteres Wandelement bzw. die darin integrierten Verbindungsvorrichtungen miteinander verbunden. Alternativ können Bausysteme mit Rohren aufgebaut werden, die beispielsweise transparente Platten halten. Weiterhin kann vorteilhaft ein Bausystem errichtet werden, welches Rohrelemente und Wandelemente umfasst, so dass ein offenes Raumteil, beispielsweise eine Bücherablage, mit einem geschlossenen Raumteil, beispielsweise einem Schrank, in einem einzigen Bausystem kombiniert werden kann.

Bei der Integration der Verbindungsvorrichtung in ein zweites Systemteil wird vorzugsweise vorgesehen, dass die Zugstange entlang einer gewählten Achse verschiebbar gehalten ist. Dazu werden innerhalb des zweiten Systemteils Führungsteile vorgesehen, die je eine Führungsöffnung aufweisen, innerhalb denen die Zugstange axial verschiebbar gelagert ist. Sofern die Führungsteile innerhalb von rohrförmigen zweiten Systemteilen angeordnet werden, so werden vorzugsweise zylinderförmige Führungsteile verwendet, deren Aussendurchmesser dem Innendurchmesser der Rohrelemente entspricht.

Damit bei der Verbindung der ersten und zweiten Systemteile sofort eine korrekte gegenseitige Positionierung erzielt wird, werden vorzugsweise zweiteilige Führungsteile verwendet, die eine formschlüssig in das erste Systemteil einsetzbare erste Führungskomponente und eine vorzugsweise formschlüssig in das zweite Systemteil einsetzbare zweite Führungskomponente aufweisen. Vorzugsweise sind die beiden Führungskomponenten als Ringflanschelemente oder als Flanschzapfen ausgebildet.

In weiteren bevorzugten Ausgestaltungen umfasst die Verbindungsvorrichtung ein elastisches Element, wie eine Schraubenfeder oder Spiralfeder, das auf eines der Führungsteile abgestützt ist und auf die Zugstange einwirkt, so dass diese in Richtung des anderen Führungsteils gedrückt wird. Beispielsweise umfasst die Zugstange einen Gewindeschaft, auf dem eine Schraubenmutter sitzt, gegen die das elastische Element andrückt. Damit das Lagerteil eingesetzt oder entfernt werden kann, wird die Zugstange manuell gegen das elastische Element verschoben, so dass der Haltekopf oder der Spannkopf angehoben wird und das Lagerteil eingesetzt oder entnommen werden kann. Anschliessend wird die Zugstange vom elastischen Element wieder axial verschoben, bis der im Bereich des elastischen Elements liegende Haltekopf oder Spannkopf am eingesetzten Lagerteil anliegt und gehalten wird. Anschliessend wird ein weiteres erstes Systemteil auf der anderen Seite der Zugstange angeordnet und durch eine Drehung des Spannkopfs fixiert. Die Montage der Verbindungsvorrichtung erfolgt daher schrittweise unterstützt von dem als Druckfeder agierenden elastischen Element. Der Aufbau einfacher und komplexer Bausysteme mit beliebigen Systemteilen kann daher rasch und bequem vollzogen werden.

Nachfolgend wird die Erfindung anhand von Zeichnungen näher erläutert. Dabei zeigt:
- Fig. 1a: eine dem Aufbau eines Bausystems dienende erfindungsgemässe Verbindungsvorrichtung 1 mit einer noch nicht festgezogen Spannvorrichtung 11, mittels der zwei erste Systemteile 5A, 5B, beispielsweise zwei Elemente eines Möbelstücks, eines Gestells, eines Regals, eines Schrankes oder einer Raumabgrenzung, miteinander lose verbunden sind;
- Fig. 1b: die Verbindungsvorrichtung 1 von Figur 1a nach dem Festziehen der Spannvorrichtung 11;
- Fig. 2a - 2g: den Vorgang der Installation der Verbindungsvorrichtung 1 von Figur 1a zur Verbindung der zwei ersten Systemteile 5A, 5B, die ein Rechteckprofil aufweisen;
- Fig. 3: vier erste Systemteile 5A, 5B, 5C, und 5D, die durch erfindungsgemässe Verbindungsvorrichtungen 1A, 1B, 1C, und 1D miteinander verbunden sind, die innerhalb von zweiten Systemteilen 3A, 3B, 3C, und 3D gehalten sind;
- Fig. 4a: die Verbindungsvorrichtung 1 von Figur 1a in einer weiteren vorzugsweisen Ausgestaltung mit der noch nicht festgezogenen Spannvorrichtung 11;
- Fig. 4b: die Verbindungsvorrichtung 1 von Figur 4a nachdem die Spannvorrichtung 11 in Richtung zum Spannkopf 1121 verschoben und dieser vom Führungsteil 22 abgehoben wurde, um das Lagerteil 15 einsetzen zu können;
- Fig. 4c: eine vorzugsweise ausgestaltete Spannvorrichtung 11, die ein Halteteil 111 mit einem Haltekopf 1111 und einem Halteschaft 1112 in Form einer Gewindehülse umfasst, die ein Aussengewinde und Innengewinde aufweist, in dem ein Spannschaft 1122 eines Spannteils 112 gehalten ist;
- Fig. 5a: ein zweites Lagerteil 15, welches in eines der Systemteile 5A, 5B, 5C, und 5D einsetzbar ist, um einen Spannkopf 1121 zu halten;
- Fig. 5b: das zweite Lagerteil 15 mit der Lageröffnung 150, dem Lagersitz 151 und der Arretiernut 152 in Schnittdarstellung entlang der in Figur 5a eingezeichneten Schnittlinie A--A;
- Fig. 6a: die Spannschraube 112 von Figur 4c mit dem im zweiten Lagerteil 15 von Figur 5a ruhenden Spannkopf 1121, der als gegen den Spannschaft 1122 gerichteter Keil 11212 ausgebildet ist und der mit den einander gegenüberliegenden Spannflächen bzw. Keilwänden 11211 an den Sitzflächen 1511 des Lagersitzes 151 anliegt;
- Fig. 6b: die Spannschraube 112 von Figur 6a nach einer Drehung von zum Beispiel 85°, nach der der Spannkopf 1121 aus dem Lagersitz 151 hinaus gedreht wurde;
- Fig. 6c: die Spannschraube 112 von Figur 6b nach einer weiteren Drehung des Spannkopfs 1121 um z.B. 5°, nach der der Keil 11212 des Spannkopfs 1121 in die Arretiernut 152 eingesenkt wurde;
- Fig. 7a: ein Bausystem 30 bestehend aus rohrförmigen ersten Systemteilen 5A, 5B, 5C, 5D und zweiten 3A, 3B, 3C, 3D, die durch erfindungsgemässe Verbindungsvorrichtungen 1 gemäss Figur 1a oder Figur 4a zusammengehalten werden;
- Fig. 7b: einen Knotenpunkt N des Bausystems 30 von Figur 7a in beispielsweiser Ausgestaltung;
- Fig. 8a: in Explosionsdarstellung ein Bausystem 30 bestehend aus plattenförmigen ersten Systemteilen 5A, 5B, 5C, 5D, und plattenförmigen zweiten Systemteilen 3A, 3B, 3C, 3D, die durch erfindungsgemässe Verbindungsvorrichtungen 1 gemäss Figur 1a oder Figur 4a zusammengehalten werden;
- Fig. 8b: einen Teil eines plattenförmigen Systemmoduls 50 mit darin integrierten ersten Systemteilen 5A, 5B;
- Fig. 8c: eines der zweiten Systemteile 3B von Figur 8a mit zwei darin eingesetzten erfindungsgemässen Verbindungsvorrichtungen 1, von denen je der Spannkopf 1121 und das Führungsteil 22 sichtbar sind, zu deren Arretierung zwei Montageteile 15 bereitgestellt wurden; und
- Fig. 8d: das zweite Systemteil 3B in einer Schnittdarstellung entlang der in Figur 8c eingezeichneten Schnittlinie B--B.

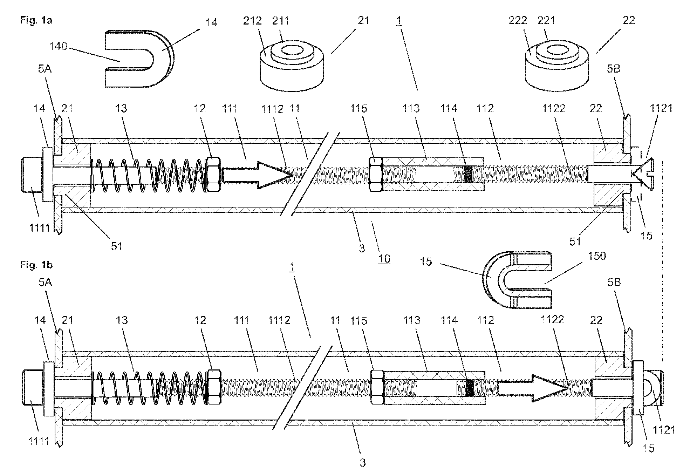

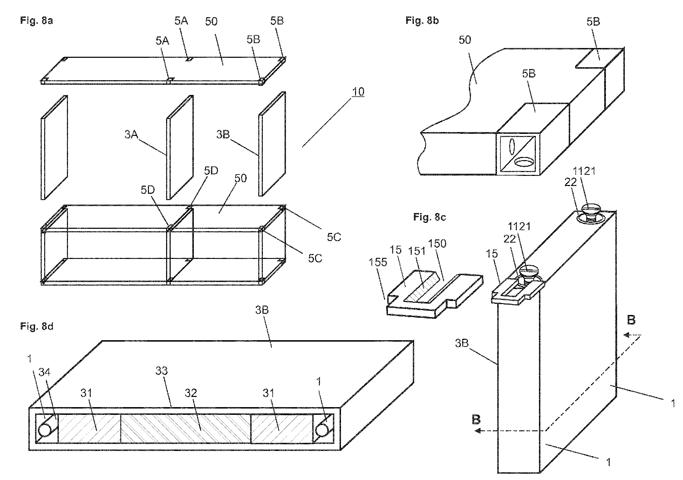

Die Figuren 1a und 1b zeigen eine vorzugsweise Ausgestaltung einer erfindungsgemässen Verbindungsvorrichtung 1, die dem Aufbau eines Bausystems 10 dient, wie es in den Figuren 7b und 8b beispielsweise gezeigt ist. Figur 7a zeigt ein Bausystem 10, welches aus rohrförmigen ersten Systemteilen 5A, 5B, 5C, 5D und rohrförmigen zweiten Systemteilen 3A, 3B, 3C, 3D zusammengesetzt ist. Figur 8a zeigt ein Bausystem 10, welches aus plattenförmigen ersten Systemteilen 5A, 5B, 5C, 5D und plattenförmigen zweiten Systemteilen 3A, 3B, 3C, 3D zusammengesetzt ist. Möglich ist auch eine Mischung von rohrförmigen oder plattenförmigen ersten und zweiten Systemteilen 5A, 5B, 5C, 5D und 3A, 3B, 3C, 3D.

In die rohrförmigen oder plattenförmigen zweiten Systemteile 3; 3A, 3B, 3C, 3D sind die in den Figuren 1a und 1b gezeigten Verbindungsvorrichtungen 1 integriert, mittels denen je zwei einander gegenüberliegende erste Systemteile 5, beispielsweise die Systemteile 5A und 5B, verbunden werden.

Die in Figur 1a gezeigte Verbindungsvorrichtung 1 weist eine Spannvorrichtung 11 mit einer mehrteiligen Zugstange auf, die an einer Seite einen Haltekopf 1111 und auf der anderen Seite einen Spannkopf 1121 aufweist. In der gezeigten Ausgestaltung weist die Spannvorrichtung 11 ein Halteteil 111 und ein Spannteil 112, die durch ein Verbindungsteil 113 miteinander verbunden sind. Das Halteteil 111 ist als Schraube ausgestaltet und umfasst den Haltekopf 1111 und einen mit einem Gewinde versehenen Halteschaft 1112. Das Spannteil 112 ist ebenfalls als Schraube ausgestaltet und umfasst den Spannkopf 1121 und einen mit einem Gewinde versehenen Spannschaft 1122. Das Verbindungsteil 113 ist als Gewindehülse mit einem Innengewinde ausgestaltet, in das von beiden Seiten das Halteteil 111 und das Spannteil 112 derart ein geschraubt sind, dass eine gewünschte Abstand zwischen dem Haltekopf 1111 und dem Spannkopf 1121 resultiert. Auf dem Halteschaft 1112 ist eine Kontermutter 115 vorgesehen, die gegen die Verbindungshülse 113 gedreht ist, so dass der Halteschaft 1112 gegenüber der Verbindungshülse 113 fixiert ist. Der Halteschaft 1112, die Verbindungshülse 113 und der Spannschaft 1122 bilden die Zugstange.

Auf dem Teil des Spannschafts 1122, der in die Verbindungshülse 113 eingedreht ist, ist ein Verbindungsmittel 114 aufgebracht, welches das Einschraubdrehmoment oder das Ausschraubdrehmoment erhöht. Der Spannschaft 1122 kann daher innerhalb der Verbindungshülse 113 gedreht werden, ohne dass er sich selbsttätig aus der Verbindungshülse 113 lösen kann.

Die Verbindungsvorrichtung 1 ist innerhalb eines zweiten Systemteiles 3, beispielsweise eines holzzylindrischen oder mehrkantigen Rohrelements oder innerhalb eines Wandelements, gehalten und umfasst ein erstes Führungsteil 21, das benachbart zum Haltekopf 1111 angeordnet ist, und ein zweites Führungsteil 22, das benachbart zum Spannkopf 1121 angeordnet ist. Mittels der beiden Führungsteile 21 und 22, die in Figur 1a auch separat dargestellt sind, wird die Zugstange 1112, 113, 1121 verschiebbar gehalten.

Das erste Führungsteil 21 weist eine erste hohlzylindrische Führungskomponente 211, die formschlüssig in eine Montageöffnung in einem der ersten Systemteile 5A eingesetzt ist, und eine zweite Führungskomponente 212 auf, die formschlüssig in einem der Endstücke des rohrförmigen zweiten Systemteils 3 sitzt.

Das zweite Führungsteil 22 weist eine erste hohlzylindrische Führungskomponente 221, die formschlüssig in eine Montageöffnung im anderen ersten Systemteil 5B eingesetzt ist, und eine zweite Führungskomponente 222 auf, die formschlüssig im anderen Endstück des rohrförmigen zweiten Systemteils 3 sitzt.

Die beiden ersten Systemteile 5A, 5B und das zweite Systemteil 3 sind formschlüssig aber lose miteinander verbunden. Durch das Anziehen der Spannvorrichtung 11 erfolgt ein stabiles Verspannen der beiden ersten Systemteile 5A, 5B mit dem zweiten Systemteil 3.

Dazu wurde der Haltekopf 1111 durch eine Montageöffnung 51 in einem der ersten Systemteile 5A und der Spannkopf 1121 durch eine Montageöffnung 51 im anderen ersten Systemteil 5B hindurch geführt. Damit der Haltekopf 1111 nicht mehr zurück in die Montageöffnung 51 gelangen kann, wurde ein erstes Lagerteil 14 unter den Haltekopf 1111 geschoben. Das erste Lagerteil 14 ist U-förmig ausgebildet und weist eine Lageröffnung 140 auf, die der Aufnahme des Halteschafts 1112 dient.

Unter den Spannkopf 1121 wird das in Figur 1b gezeigte vorzugsweise ausgestaltete zweite Lagerteil 15 geschoben, das eine Lageröffnung 150 aufweist, die den Spannschaft 1122 und einen wesentlichen Teil des Spannkopfs 1121 aufnehmen kann. Dazu ist der Spannkopf 1121 keilförmig ausgebildet und derart ausgerichtet, dass die Schenkel des zweiten Lagerteils 22 parallel daran vorbei geschoben werden können. In Figur 1a ist das zweite Lagerteil 22 strichpunktiert gezeigt, so dass ersichtlich ist, dass der Spannkopf 1121 in das zweite Lagerteil 22 eingesenkt ist. In dieser Lage des Spannkopfs 1121 ist die Spannvorrichtung 11 bzw. die Zugstange 1112, 113, 1122 noch nicht gespannt. Die beiden ersten Systemteile 5A, 5B, in die die beiden Führungsteilen 21, 22 eingesetzt sind, werden lediglich lose zusammengehalten. Der Haltekopf 1111 wird durch das elastische Element bzw. die Schraubenfeder 13, die gegen die Schraubenmutter 12 drückt, gegen das erste Lagerteil 14 gezogen, indem die Zugstange 1112, 113, 1122 in Richtung zum Spannkopf 1121 gedrückt wird. In diesem Zustand wirkt der Haltekopf 1111 daher bereits mit der Kraft des elastischen Elements 13 auf das erste Lagerteil 14 ein, während der Spannkopf 1121 noch keine Kraft auf das zweite Lagerteil 22 ausübt.

Figur 1b zeigt die Verbindungsvorrichtung 1 von Figur 1a nachdem der Spannkopf 1121 etwa um eine Vierteldrehung gedreht wurde. Durch diese Drehung wurde der Spannkopf 1121 über das zweite Lagerteil 15 gedreht, wodurch die Spannungsvorrichtung 11 gespannt bzw. die Zugstange 1112, 113, 1122 gedehnt wurde. In dieser Lage werden der Haltekopf 1111 und der Spannkopf 1112 mit entsprechend hoher Zugkraft gegen das erste und zweite Lagerteil 14 und 15 und somit auch gegen die beiden dazwischenliegenden ersten Systemteile 5A, 5B gezogen, die nun von beiden Seiten an das dazwischen liegende zweite Systemteil 3 andrücken. Die beiden ersten Systemteile 5A, 5B und das zweite Systemteil 3 bilden nach dem Drehen des Spannkopfs 1121 somit ein stabiles, aber demontierbares Bausystem 10 in einer einfachen Ausgestaltung. Dieses Bausystem 10 kann beliebig erweitert werden. Dabei ist zu beachten, dass das zweite Systemelement 3 rohrförmig oder plattenförmig ausgestaltet sein kann.

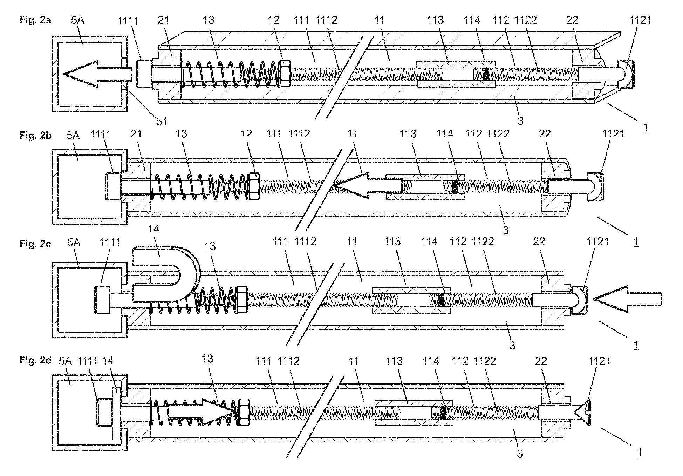

Die Figuren 2a - 2g zeigen im Detail den Vorgang der Installation der Verbindungsvorrichtung 1 von Figur 1a zur Verbindung der beiden ersten Systemteile 5A, 5B, die in dieser Ausgestaltung ein Rechteckprofil aufweisen.

Figur 2a zeigt die Verbindungsvorrichtung 1, die exemplarisch in ein plattenförmiges zweites Systemteil 3 integriert ist, vor dem Einsetzen in das erste Systemteil 5A. Die Verbindungsvorrichtung 1 wird mit dem Haltekopf 1111 gegen die Öffnung 51 im ersten Systemteil 5A geführt. Der Haltekopf 1111 wird durch die Schraubenfeder 13 gegen das erste Führungsteil 21 gedrückt. Die beiden Lagerteile 21 und 22 sind noch nicht eingesetzt. Das zweite Führungsteil 22 ist räumlich in Schnittdarstellung gezeigt.

Figur 2b zeigt die Verbindungsvorrichtung 1 von Figur 2a, nachdem der Haltekopf 1111 durch die Montageöffnung 51 in das Rechteckprofil des ersten Systemteils 5A eingeführt wurde. Der Haltekopf 1111 wird noch immer gegen das erste Führungsteil 21 gedrückt, weshalb das erste Lagerteil 14 noch nicht eingesetzt werden kann. Exemplarisch ist die Verbindungsvorrichtung 1 in Figur 2b in ein rohrförmiges zweites Systemteil 3 eingesetzt.

In Figur 2c wird eine Druckkraft manuell auf den Spannkopf 1121 ausgeübt, durch die die Zugstange bzw. die Zugstange 1112, 113, 1122 gegen die Kraft der Schraubenfeder 113 gegen das erste Systemteil 5A gedrückt wird, so dass der Haltekopf 1111 vom ersten Führungsteil 21 abgehoben wird und das erste Lagerteil 14 dazwischen geschoben werden kann.

Figur 2d zeigt die Verbindungsvorrichtung 1 ohne äussere Krafteinwirkung. Die Zugstange 1112, 113, 1122 wird durch die Schraubenfeder 13 wieder in Richtung des Spannkopfs 1121 gedrückt, so dass der Haltekopf 1111 das erste Lagerteil 14 durch die Kraft der Schraubenfeder 13 festhält. Durch die Kraft der Schraubenfeder 13 wird nun auch der Spannkopf 1121 wieder vom zugehörigen Führungsteil 22 abgehoben.

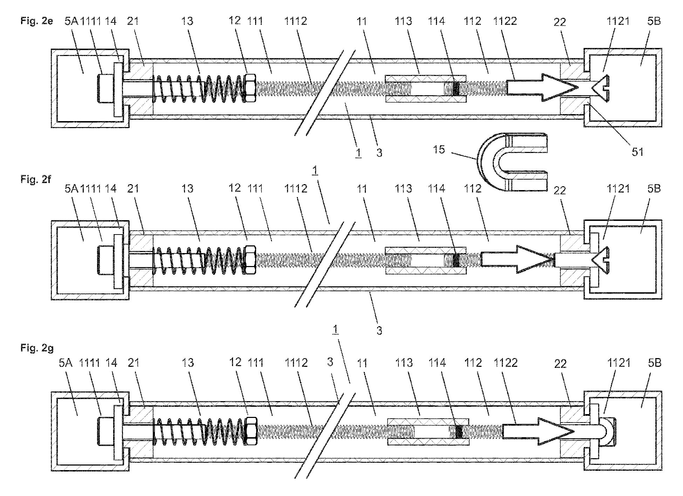

Figur 2e zeigt die Verbindungsvorrichtung 1 nachdem das zweite Lagerteil 22 mit der entsprechenden Führungskomponente 221 in die Montageöffnung 51 des anderen ersten Systemteils 5B eingesetzt und der Spannkopf 1121 durch diese Montageöffnung 51 hindurch geführt wurde. Gezeigt ist ferner das zweite Lagerteil 15, das in der gezeigten Ausrichtung des Spannkopfs 1121, zwischen den Spannkopf 1121 und das zweite Lagerteil 15 eingeschoben werden kann.

Figur 2f zeigt die Verbindungsvorrichtung 1 mit dem eingesetzten zweiten Lagerteil 15, bevor der Spannkopf 1121 gedreht und die Spannvorrichtung 11 gespannt wird. Die beiden ersten Systemteile 5A, 5B sind somit lose mit dem zweiten Systemteil 3 verbunden.

Figur 2g zeigt die Spannvorrichtung 1 nach dem Drehen des Spannkopfs 1121, durch das die Zugstange 1112, 113, 1122 gedehnt und gespannt wurde. Die beiden ersten Systemteile 5A, 5B werden durch die Zugstange 1112, 113, 1122 somit in der Art einer sehr starken Feder gegen das zweite Systemteil 3 gezogen, wodurch eine stabile Verbindung resultiert.

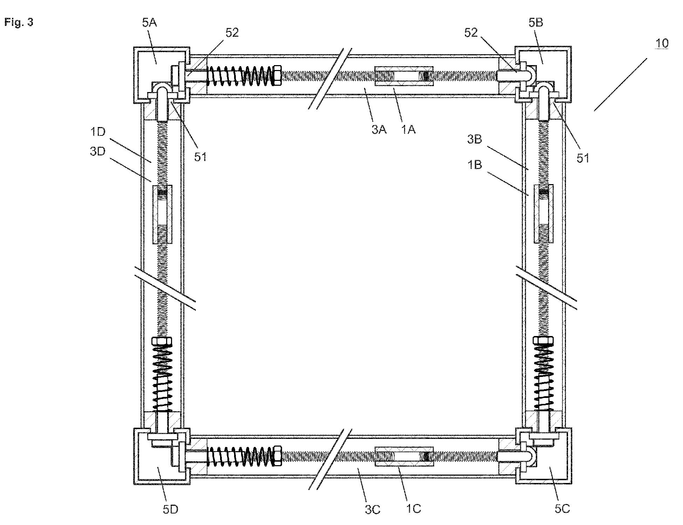

Figur 3 zeigt vier erste Systemteile 5A, 5B, 5C, und 5D, die durch erfindungsgemässe Verbindungsvorrichtungen 1A, 1B, 1C, und 1D miteinander verbunden sind, die innerhalb von zweiten Systemteilen 3A, 3B, 3C, und 3D gehalten sind. Durch die zweiten Systemteile 3A, 3B, 3C, und 3D wird beispielsweise ein rechteckiger Kasten 10 mit vier Wänden gebildet, die an die ersten Systemteile 5A, 5B, 5C, und 5D anschliessen, welche als Rechteckprofile ausgestaltet sind und die metallenen Eckprofile des Kastens 10 bilden. Sofern die zweiten Systemteile 3A, 3B, 3C, und 3D hingegen rohrförmig ausgestaltet sind, wird ein Rohrsystem gebildet.

Ein Ring mit Verbindungsvorrichtungen 1A, 1B, 1C, und 1D ist vorzugsweise an beiden Enden der ersten Systemteile 5A, 5B, 5C, und 5D vorgesehen, so dass ein Bausystem 10 in Würfelform resultiert.

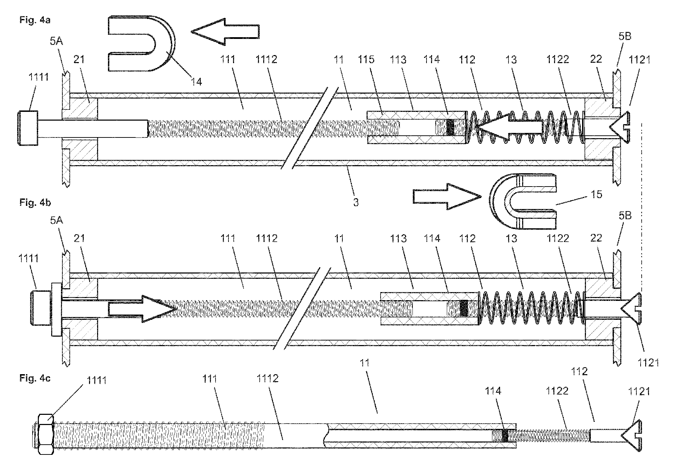

Figur 4a zeigt die Verbindungsvorrichtung 1 von Figur 1a nach in einer weiteren vorzugsweisen Ausgestaltung mit der noch nicht fest gezogenen Spannvorrichtung 11. In dieser Ausgestaltung ist die Schraubenfeder 13 benachbart zum zweiten Führungsteil 22 angeordnet und drückt gegen die Verbindungshülse 113. Die Zugstange 1112, 113, 1122 wird daher in Richtung zum Haltekopf 1111 gedrückt, so dass dieser vom ersten Führungsteil 21 abgehoben wird und das erste Lagerteil 14 zwischen dem Haltekopf 1111 und dem ersten Führungsteil 21 eingesetzt werden kann.

In Figur 4b ist gezeigt, dass der Haltekopf 1111 manuell gegen die Schraubenfeder 13 gedrückt wird, so dass sich der Spannkopf 1121 vom zweiten Führungsteil 22 abhebt und das zweite Lagerteil 15 eingesetzt werden kann. Dieses Ausführungsbeispiel zeigt, dass der Fachmann durch kinematische Umkehr verschiedene äquivalente Ausgestaltungen der Erfindung realisieren kann.

Figur 4c zeigt eine vorzugsweise ausgestaltete Spannvorrichtung 11, die ein Halteteil 111 mit einem Haltekopf 1111 und einem Halteschaft 1112 in Form einer Gewindehülse aufweist. Der Haltekopf 1111 wird durch eine Schraubenmutter gebildet, die auf ein Aussengewinde des Halteschafts 1112 gedreht ist. Der Halteschaft 1112 weist zudem ein Innengewinde auf, in das der Schraubenschaft 1122 des Spannteils 112 eingedreht ist. Dieses Ausführungsbeispiel zeigt exemplarisch, dass die Zugstange aus unterschiedlichen Teilen zusammengesetzt werden kann, die auch unterschiedliche Längen aufweisen können. In dieser Ausgestaltung wird auf eine Verbindungshülse 113 verzichtet. Die Verwendung der Schraubenmutter als Haltekopf 1111 zeigt, dass auch Gewindestangen mit einer Schraubenmutter anstelle der Halteschraube 111 und der Zugschraube 112 von Figur 4a verwendet werden können. Weiterhin kann auch eine abgestufte Gewindestange oder Gewindehülse oder eine Kombination davon verwendet werden. Die genannten Teile werden derart dimensioniert, dass bei einer entsprechenden Zugkraft die gewünschte Längendehnung der Zugstange resultiert.

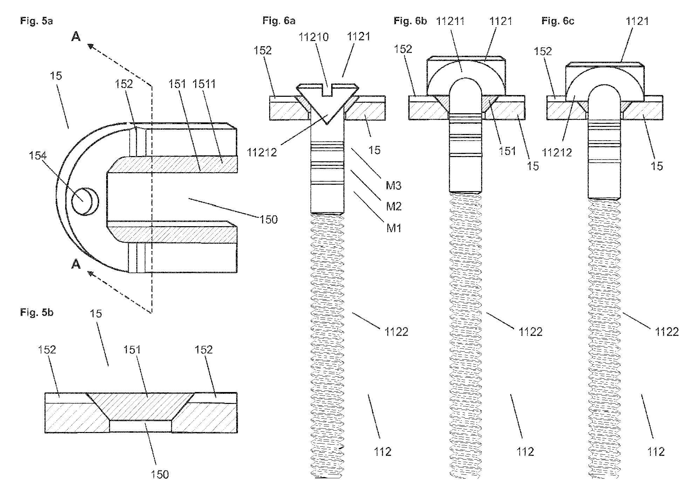

Figur 5a zeigt ein vorzugsweise ausgestaltetes zweites Lagerteil 15, welches in eines der Systemteile 5A, 5B, 5C, und 5D einsetzbar ist, um den Spannkopf 1121 von Figur 4c zu halten. Obwohl dieses zweite Lagerteil 15 für das Halten des Spannkopfs 1121 ausgebildet ist, kann es auch für die Arretierung des Haltekopfs 1111 verwendet werden.

Das zweite Lagerteil 22 ist U-förmig, Gabel-förmig oder Hufeisen-förmig ausgestaltet und weist eine Lageröffnung 150 auf, die den Spannschaft 1122 des Spannteils 112 aufnehmen kann. Angrenzend an die Lageröffnung 150 ist ein Lagersitz 151 mit geneigten Sitzflächen 1511 vorgesehen, welche parallel zueinander beidseits der Lageröffnung 150 vorgesehen sind.

Senkrecht zu den Sitzflächen verläuft eine Arretiernut 152, die dem Halten des Spannkopfs 1121 dient. Weiterhin ist ein Kopplungselement 154, d.h. eine Bohrung vorgesehen, in die ein Werkzeug eingeführt werden kann, um das zweite Lagerteil 15 zu erfassen, vom Spannteil 112 zu lösen und aus dem ersten Systemteil 5 heraus zu ziehen.

Figur 5b zeigt das zweite Lagerteil 15 mit der Lageröffnung 150, dem Lagersitz 151 und der Arretiernut 152 in Schnittdarstellung entlang der in Figur 5a eingezeichneten Schnittlinie A--A. Der Schnitt verläuft somit mittig durch die Arretiernut 152.

Figur 6a zeigt das Spannteil, d.h. die Spannschraube 112 von Figur 4c mit dem im zweiten Lagerteil 15 von Figur 5a ruhenden Spannkopf 1121, der als gegen den Spannschaft 1122 gerichteter Keil 11212 ausgebildet ist und der mit den einander gegenüberliegenden Spannflächen oder Keilwänden 11211, die zumindest annähernd senkrecht zueinander geneigt sind, an den Sitzflächen 1511 des Lagersitzes 151 anliegt. Der Spannkopf 1121 ist somit in den Lagersitz 151 eingesenkt und kann durch eine Drehung z.B. Um etwa 75°-85° aus dem Lagersitz 151 heraus gedreht werden. Die Spannfläche 11212 verläuft vorzugsweise gerundet, so dass die Spannfläche 11212 und die Sitzfläche 1511 hindernisfrei aneinander vorbei gleiten können. Der Spannkopf 1121 weist zudem ein Kopplungselement 11210 auf, das vorzugsweise ca. um 85° bis 90° gedreht zum Keil 11212 angeordnet ist und in das ein Werkzeug formschlüssig eingesetzt werden kann, um den Spannkopf 1121 zu erfassen und zu drehen. Das Kopplungselement 11210 ist vorzugsweise ein Schlitz, kann aber auch eine seitlich am Spannkopf 1121 vorgesehene Bohrung oder ein weiteres Formelement sein und kann an beliebige Werkzeuge angepasst und entsprechend gegenüber dem Keil 11212 gedreht werden.

Figur 6a zeigt ferner, dass der Spannschaft 1122 mit Markierungen M1, M2 und M3 versehen ist, die es erlauben, den Abstand zwischen dem Haltekopf 1111 und dem Spannkopf 1121 entsprechend der vorliegenden Länge der Zugstange einzustellen. Dadurch lässt sich ein entsprechender Dehnungsweg einstellen, der proportional zur Länge der Zugstange ist. Nach Überwindung des Dehnungsweges soll stets eine erforderliche Zugkraft in der Spannvorrichtung 11 auftreten.

Figur 6b zeigt die Spannschraube 112 von Figur 6a nach einer Drehung von nicht ganz 90°, nach der der Spannkopf 1121 aus dem Lagersitz 151 heraus gedreht wurde. Der Spannschaft 1122 wurde entsprechend gedehnt. Die Dehnung ist symbolisch gezeigt.

Figur 6c zeigt die Spannschraube 112 von Figur 6b nach einer weiteren Drehung des Spannkopfs 1121, nach der der Keil 11212 des Spannkopfs 1121 in die Arretiernut 152 eingesenkt und gegen ein weiteres Drehen gesichert wurde.

Figur 7a zeigt ein Bausystem 30 bestehend aus rohrförmigen ersten und zweiten Systemteilen 3A, 3B, 3C, 3D und 5A, 5B, 5C, 5D, die durch erfindungsgemässe Verbindungsvorrichtungen 1 gemäss Figur 1a oder Figur 4a miteinander verbunden sind.

Figur 7b zeigt einen Knotenpunkt N des Bausystems 30 von Figur 7a in beispielsweiser Ausgestaltung mit einem ersten Systemteil 5C, welches im Bereich des Knotenpunkts N mit drei zweiten Systemteilen 3B, 3C und 3E verbunden ist. Es ist gezeigt, dass das Rechteckprofil des ersten Systemteils 5C mit Öffnungen 51 versehen ist, durch die hindurch ein Haltekopf 1111 und zwei Spannköpfe 1121 in das Rechteckprofil eingeführt wurden und nun mit einem ersten Lagerteil 14 und zwei zweiten Lagerteilen 15 arretiert werden, die bereitgestellt wurden. Gezeigt ist ferner eine tischförmige Abdeckung 500, die stirnseitig in das erste Systemteil 5C eingesetzt werden kann, um den Knotenpunkt N abzuschliessen. Die Lagerteile 14 und 15 weisen rückseitig Ausnehmungen auf, in die die Beine der tischförmigen Abdeckung 500 eingeführt werden können.

Figur 8a zeigt in Explosionsdarstellung ein Bausystem 30 bestehend aus plattenförmigen ersten Systemteilen 5A, 5B, 5C, 5D und plattenförmigen zweiten Systemteilen 3A, 3B, 3C, 3D, die durch erfindungsgemässe Verbindungsvorrichtungen 1 gemäss Figur 1a oder Figur 4a miteinander verbunden sind. Gezeigt ist ein plattenförmiges Systemmodul 50 mit darin integrierten ersten Systemteilen 5A, 5B.

Figur 8b zeigt einen Teil des plattenförmigen Systemmoduls 50 von Figur 8a, an dessen Rand zwei rechteckförmige erste Systemteile 5B vorgesehen sind. Anstelle eines durchgehenden ersten Systemteils 5B sind daher nur Teile davon im Bereich der Knotenpunkte im Systemmodul 50 vorgesehen.

Figur 8c zeigt eines der zweiten Systemteile 3B von Figur 8a mit zwei darin eingesetzten erfindungsgemässen Verbindungsvorrichtungen 1, von denen je der Spannkopf 1121 sichtbar ist, die anhand der gezeigten zweiten Lagerteile 15 arretierbar sind, nachdem sie in die ersten Systemteile 5B von Figur 8b eingeschoben wurden.

Figur 8d zeigt das zweite Systemteil 3B in einer Schnittdarstellung entlang der in Figur 8c eingezeichneten Schnittlinie B--B. Das Systemteil 3B umfasst eine Verkleidung 33 bestehend aus vorzugsweise sechs Wandelementen beispielsweise aus Metall oder Edelholz, die in bekannter Weise miteinander verbunden, beispielsweise verleimt sind. Innerhalb der Verkleidung sind zwei Strukturelemente 31 vorgesehen, die der Verkleidung 33 die erforderliche Stabilität verleihen und Hohlräume 34 abgrenzen, in denen die Verbindungsvorrichtungen 1 angeordnet sind. Zwischen den Strukturelementen 31 ist beispielsweise ein Füllmaterial oder Isolationsmaterial 32, beispielsweise Karton vorgesehen, welches dem zweiten Systemteil 3B die gewünschten Eigenschaften hinsichtlich Festigkeit und Isolation verleiht.

### Literaturverzeichnis

[1] EP0400345A1
[2] DE4316808A1
[3] WO02/099292A1
[4] EP2034194B1

### Bezugszeichenliste

- 1: Verbindungsvorrichtung
- 10: Bausystem, wie Möbel, Regal, Gestell, oder Raumabgrenzung
- 11: Spannvorrichtung
- 111: Halteteil, Halteschraube
- 1111: Haltekopf
- 1112: Halteschaft
- 112: Spannteil
- 1121: Spannkopf
- 11210: Kopplungselement
- 11211: Spannfläche
- 11212: Keil
- 113: Verbindungsteil, Verbindungshülse
- 114: Gewindebeschichtung, Verbindungsmaterial
- 115: Kontermutter
- 13: elastisches Element, Feder
- 14: erstes Lagerteil
- 140: Lageröffnung
- 15: zweites Lagerteil
- 150: Lageröffnung
- 151: Lagersitz
- 1511: Sitzfläche
- 152: Arretiernut
- 154: Kopplungselement
- 155: Ausnehmungen
- 21: erstes Führungsteil
- 211: erste Führungskomponente
- 212: zweite Führungskomponente
- 22: zweites Führungsteile
- 221: erste Führungskomponente
- 222: zweite Führungskomponente
- 3: zweites Systemteil
- 3A, ..., 3D: zweite Systemteile
- 31: Strukturelemente
- 32: Füllmaterial
- 33: Verkleidung
- 34: Hohlräume
- 5a, ..., 5D: erste Systemteile
- 50: Systemmodul
- 500: Abdeckung
- 51, 52: Montageöffnung

## Patentansprüche

1. Verbindungsvorrichtung (1) mit einer Spannvorrichtung (11) zur lösbaren Verbindung von zwei ersten Systemteilen (5A, 5B) eines Bausystems (10), wie eines Möbelstücks, eines Gestells, eines Regals, eines Schranks oder einer Raumabgrenzung, **dadurch gekennzeichnet, dass** die Spannvorrichtung (11) eine einteilige oder mehrteilige Zugstange (1112; 113; 1122) aufweist, die einen Haltekopf (1111) und einen Spannkopf (1121) miteinander verbindet, der wenigstens eine zur Längsachse der Zugstange (1112; 113; 1122) geneigte Spannfläche (11211) aufweist, dass ein mit dem einen ersten Systemteil (5A) koppelbares erstes Lagerteil (14) vorgesehen ist, welches eine der Aufnahme der Zugstange (1112; 113; 1122) dienende Lageröffnung (140) aufweist, und dass ein mit dem anderen ersten Systemteil (5B) koppelbares zweites Lagerteil (15) vorgesehen ist, welches eine der Aufnahme der Zugstange (1112; 113; 1122) dienende Lageröffnung (150) und einen der Aufnahme des Spannkopfs (1121) dienenden Lagersitz (151) aufweist, aus dem der Spannkopf (1121) mit einer Drehung herausdrehbar ist, um die Zugstange (1112; 113; 1122) zu spannen.

2. Verbindungsvorrichtung (1) nach Anspruch 1, **dadurch gekennzeichnet, dass** das erste Lagerteil (14) und das zweite Lagerteil (15) vorzugsweise U-förmig ausgestaltet sind und dass der Lagersitz (151) des zweiten Lagerteils (15) wenigstens eine geneigte Sitzfläche (1511) aufweist, die vorzugsweise parallel zur Spannfläche (11211) des Spannkopfs (1121) verläuft, wenn dieser im Lagersitz (151) eingesenkt ist.

3. Verbindungsvorrichtung (1) nach Anspruch 1 oder 2, **dadurch gekennzeichnet, dass** das zweite Lagerteil (15) eine Arretiernut (152) aufweist, die vorzugsweise um 90° quer zur Längsachse des Lagersitzes (152) verläuft und in die hinein der aus dem Lagersitz (151) herausgedrehte Spannkopf (1121) einsenkbar ist.

4. Verbindungsvorrichtung (1) nach Anspruch 1, 2 oder 3, **dadurch gekennzeichnet, dass** die Zugstange (1112; 113; 1122) ein mit dem Haltekopf (1111) versehenes Halteteil (111), vorzugsweise eine Halteschraube, und ein mit dem Spannkopf (1121) versehenes Spannteil (112), vorzugsweise eine Spannschraube, aufweist, die direkt oder durch ein Verbindungsteil (113), vorzugsweise eine Gewindehülse, miteinander verbunden sind.

5. Verbindungsvorrichtung (1) nach Anspruch 4, **dadurch gekennzeichnet, dass** das Halteteil (111) einen mit wenigstens einem Gewinde versehenen Halteschaft (1112), einen Schraubenschaft oder eine Gewindehülse, aufweist und dass das Spannteil (112) einen mit wenigstens einem Gewinde versehenen Spannschaft (1122), einen Schraubenschaft oder eine Gewindehülse, aufweist.

6. Verbindungsvorrichtung (1) nach Anspruch 5, **dadurch gekennzeichnet, dass** der Halteschaft (1112) drehfest mit dem Verbindungsteil (113) verbunden ist und der Spannschaft (1122) über eine Gewindebeschichtung (114) mit dem Verbindungsteil (113) verbunden ist, oder dass der Spannschaft (1122) Halteschaft (1112) drehfest mit dem Verbindungsteil (113) verbunden ist und der Halteschaft (1112) über eine Gewindebeschichtung mit dem Verbindungsteil (113) verbunden ist.

7. Verbindungsvorrichtung (1) nach einem der Ansprüche 1-6, **dadurch gekennzeichnet, dass** die Verbindungsvorrichtung (1) in ein zweites Systemteil (3), vorzugsweise ein Rohrelement oder eine Wandelement, eingebettet ist.

8. Verbindungsvorrichtung (1) nach Anspruch 7, **dadurch gekennzeichnet, dass** das zweite Systemteil (3) an einem Ende ein erstes Führungsteil (21) und am gegenüberliegenden Ende ein zweites Führungsteil (22) aufweist, die je eine Lageröffnung aufweisen, innerhalb denen die Zugstange (1112; 113; 1122) axial verschiebbar gelagert ist.

9. Verbindungsvorrichtung (1) nach Anspruch 8, **dadurch gekennzeichnet, dass** vorzugsweise jedes der vorzugsweise zylindrischen Führungsteile (21, 22) eine vorzugsweise formschlüssig in das erste Systemteil (5A; 5B) einsetzbare erste Führungskomponente (221) und/oder eine vorzugsweise formschlüssig in das zweite Systemteil (3) einsetzbare zweite Führungskomponente (221) aufweist.

10. Verbindungsvorrichtung (1) nach Anspruch 8 oder 9, **dadurch gekennzeichnet, dass** ein elastisches Element (13), wie eine Schraubenfeder, auf einem der Führungsteile (21, 22) sitzt und auf die Zugstange (1112; 113; 1122) einwirkt, so dass diese in Richtung des anderen Führungsteils (22; 21) gestossen wird.

11. Bausystem (10), wie Möbelstück, Gestell, Regal, Schrank oder Raumabgrenzung, mit wenigstens zwei ersten Systemteilen (5A, 5B), die durch wenigstens eine Verbindungsvorrichtung (1) nach einem der Ansprüche 1-10 miteinander verbunden sind.

12. Bausystem (10) nach Anspruch 11, **dadurch gekennzeichnet, dass** die ersten und die zweiten Systemteile (5A, 5B) durch je zwei Verbindungsvorrichtungen (1) miteinander verbunden sind, die in einem gemeinsamen vorzugsweise plattenförmigen zweiten Systemteil (3A) oder die je in einem separaten vorzugsweise rohrförmigen zweiten Systemteil (3A; 3B) angeordnet sind.

13. Bausystem (10) nach Anspruch 11 oder 12, **dadurch gekennzeichnet, dass** wenigstens zwei erste Systemteile (5A, 5B) in ein vorzugsweise plattenförmiges Systemmodul (50) integriert oder damit verbundenen sind und dass zwei Systemmodule (50) durch vorzugsweise vier erfindungsgemässe Verbindungsvorrichtungen (1) miteinander verbunden sind.

14. Bausystem (10) nach Anspruch 11, 12 oder 13, **dadurch gekennzeichnet, dass** die ersten Systemteile (5A, 5B) Metallrohre mit einem Rechteckquerschnitt sind.

15. Bausystem (10) nach Anspruch 14, **dadurch gekennzeichnet, dass** jedes der ersten Systemteile (5A; 5B) eine oder mehrere Montageöffnungen (51, 52) aufweist, durch die hindurch der Haltekopf (1111) oder der Spannkopf (1121) einer Verbindungsvorrichtung (1) führbar und mittels eines ersten oder zweiten Lagerteils (21, 22) arretierbar sind.
